Europäisches Patentamt

European Patent Office

Office européen des brevets

(11) Publication number: **0 039 465**
A1

## (12) EUROPEAN PATENT APPLICATION

(21) Application number: 81103183.0

(22) Date of filing: 28.04.81

(51) Int. Cl.³: **B 64 D 25/14**, F 04 F 5/18

(30) Priority: 01.05.80 US 145526

(43) Date of publication of application: 11.11.81
Bulletin 81/45

(84) Designated Contracting States: DE FR GB NL

(71) Applicant: The B.F. GOODRICH Company,
Dept. 0015 WHB-6 500 South Main Street, Akron,
Ohio 44318 (US)

(72) Inventor: Fisher, John Melvin, 622 Sackett Avenue,
Cuyahoga Falls Ohio 44221 (US)

(74) Representative: von Kreisler, Alek et al, Deichmannhaus
am Hauptbahnhof, D-5000 Köln 1 (DE)

(54) Inflation apparatus.

(57) An inflation system (10) for an inflatable container in which a gas generator (19) is mounted within and spaced from the wall (13) of a tubular aspirator conduit (11) for shielding the hot surfaces of the generator. The space around the gas generator provides a passage (27) for ambient air to flow from a throat end of the conduit towards an intermediate portion of the conduit where gases from the generator are ejected at high velocity to cause ejection of air and gas from the conduit into the inflatable container.

# INFLATION APPARATUS

## BACKGROUND OF THE INVENTION

This invention relates to inflation apparatus and particularly to apparatus for rapid inflation of large inflatable containers such as escape slides for aircraft. It has been found that gas generators producing an inert gas such as nitrogen are especially adapted to produce the gas required for aspirating ambient air and injecting the air and gas into the inflatable container.

One of the problems with gas generators has been the high temperature of the generator surfaces during the generation process which may damage the slide or burn the passengers if inadvertently touched. Application of insulation is not desirable because it increases the weight of the apparatus and the space required to pack and store the slide and inflation apparatus. Another problem has been with hoses extending from the generator to the aspirator. These hoses cause problems when used with inflatable containers which need to be tightly packed such as escape slides, helicopter floats and life rafts because they tend to become kinked or entangled during the deployment of the containers.

Where separate aspirators and generators are used, another problem is the separate mounting of these units at different locations and the individual packing of the units which is necessary.

## SUMMARY OF THE INVENTION

An inflation apparatus in accordance with one aspect of this invention provides a gas generator which is mounted within and spaced from the wall of a tubular aspirator conduit for shielding the hot surfaces of the

0039465

- 2 -

generator and at the same time creating space around the generator for passage of ambient air through the conduit.

In accordance with another aspect of the invention, the gas from the generator is ejected at high velocity at a position downstream of the generator and into a portion of the conduit having a reduced cross section. For optimum aspiration, the generator and conduit may be mounted as one unit on the inflatable container simplifying the manufacture and packing of the escape slide assembly.

The accompanying drawings show a preferred form and a modification of an inflation system made in accordance with and embodying this invention and which are representative of how this invention may be practiced.

## BRIEF DESCRIPTION OF THE DRAWINGS

Fig. 1 is a sectional view of an elevation of an inflation apparatus embodying the invention mounted on an inflatable container with parts being broken away.

Fig. 2 is a view of the throat end of the apparatus taken along the plane of line 2-2 in Fig. 1.

Fig. 3 is a view of the delivery end of the apparatus taken along the plane of line 3-3 in Fig. 1.

Fig. 4 is a sectional view like Fig. 1 showing a modification in which the check valve is located upstream of the injection nozzle ring.

## DETAILED DESCRIPTION

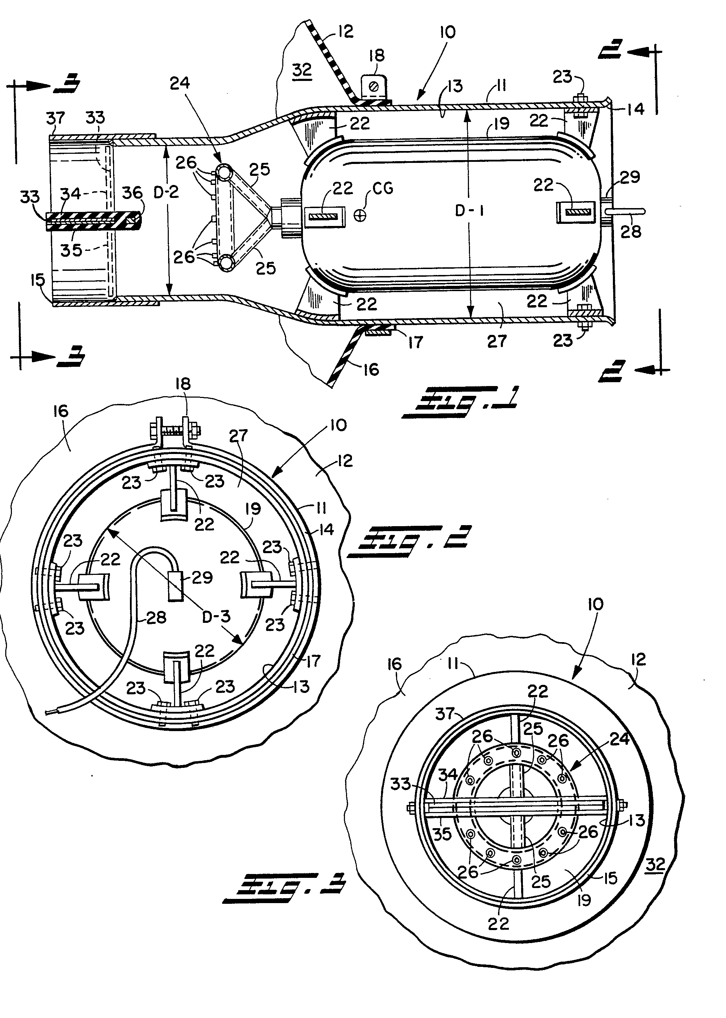

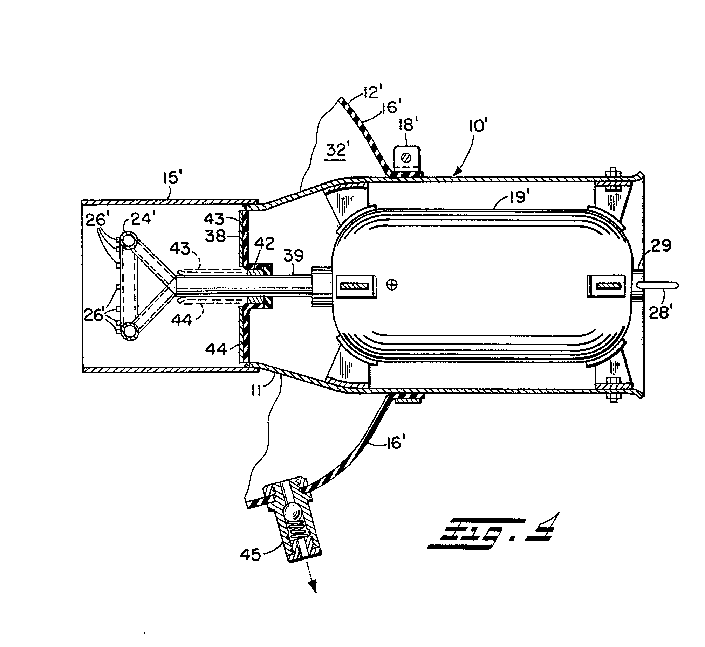

Referring to Figs. 1, 2 and 3, an inflation apparatus 10 which consists of a tubular member such as conduit 11 is shown mounted on an inflatable container such as an escape slide 12. The conduit 11 is preferably of metal such as aluminum or steel and has a cylindrical wall 13 with a larger diameter D-1 at a throat end 14 than diameter D-2 at a delivery end 15 of the apparatus 10. The escape slide 12 has a flexible wall 16 of gas impervious material with an opening having edges 17 clamped to the outer surface of the conduit 11 by suitable means such as a hose clamp 18.

A gas generator 19 which may be of cylindrical shape is positioned in the throat end 14 of the conduit 11 and may be supported on struts 22 mounted on the surface of the generator and extending outwardly to the cylindrical wall 13 of the conduit. The struts 22 at the end of the generator 19 facing the throat end 14 may have bolts and nuts 23 for fastening the struts to the conduit 11. Downstream of the generator 19 between the generator and the delivery end 15 is a gas ejection member such as tubular nozzle ring 24 connected to the gas generator by tubular supports 25 providing communication from the gas generator to the ring. The nozzle ring 24 has a plurality of openings 26 positioned at angles of about 30 degrees around the conduit 11 for ejecting gas towards the delivery end 15. Other arrangements of the openings 26 and other forms of the nozzle ring 24 may be provided to eject the gas from the generator 19 evenly across the cross-sectional area of the conduit 11.

As shown in the drawings, the generator 19 is generally cylindrical and positioned in concentric relationship to the cylindrical wall 13 of the conduit 11 providing a passage 27 between the generator and cylindrical wall which has substantially the same width along the length of the generator. Preferably, the generator 19 has a diameter D-3 substantially the same as the diameter D-2 at the delivery end 15 of the conduit 11. Also, preferably, the diameter D-1 at the throat end 14 of the conduit is greater than the diameter D-2 at the delivery end by an amount such that the cross-sectional area of the passage 27 is about equal to the cross-sectional area at the delivery end 15 of the conduit 11.

The gas generator 19 is a solid state nitrogen-generating unit producing gas at from 300 to 500 pounds per square inch (21.1 to 35.2 kilograms per square centimeter). During this process, the temperature of the generator 19 increases to above 212°F (100°C) and the surface of the generator is shielded by the cylindrical wall 13 to prevent damage to the flexible wall 16 of the escape slide 12 or injury to passengers which may occur if they touch the surface. The generator 19 is spaced from the wall 13 a distance of at least 0.75 inches (1.91 centimeters) to provide insulation.

The gas generator 19 is actuated by pulling a lanyard 28 connected to a pin in a firing unit 29 which is released when the pin is pulled. The nitrogen gas which is ejected through the openings 26 in the nozzle ring 24 has a high velocity and creates a pressure lower than the pressure of ambient air outside the conduit 11 causing an aspiration of the air through the throat end 14 of the conduit and into the delivery end 15 where it is mixed with the nitrogen gas and injected into a chamber 32 within the escape slide 12. At the beginning of the inflation cycle, the ratio of ambient air to nitrogen gas is from 8:1 to 10:1 and at the end the ratio is 0:1 with an average ratio of 4:1 over the complete cycle. In any event gas mixture within the chamber 32 is substantially all nitrogen and air and therefore nontoxic to passengers in the event the escape slide is punctured or the generator is accidently activated.

As shown in Figs. 1 and 3, a one-way valve 33 is provided for closing the conduit 11 when the inflation apparatus 10 is not in operation and also when the escape slide 12 is fully inflated. The valve 33 has a pair of semicircular flaps 34 and 35 which are resiliently mounted on a radially extending beam 36 extending across the conduit 11 at the delivery end 15 to urge the flaps into the position shown in dotted lines in Fig. 1 abutting the edge of the conduit projecting radially inward from the wall of a tube 37 supporting the one-way valve. When the gas generator 19 is actuated and the escape slide 12 is not inflated, the flaps 34 and 35 will be urged into the position shown in solid lines in Figs. 1 and 3 to permit the mixture of ambient air and nitrogen gas to be injected through the delivery end 15 of the conduit 11 and through the tube 37 into the chamber 32 of the escape slide 12. After the escape slide 12 has been inflated to a pressure of approximately three pounds per square inch (0.21 kilograms per square centimeter), the pressure within the escape slide will substantially equal the pressure in the delivery end 15 of the conduit 11 and the one-way valve 33 will close.

The inflation apparatus 10 including the conduit 11 and the gas generator 19 has a center of gravity CG, shown in Fig. 1, located towards the downstream end of the gas generator and preferably the apparatus is mounted on the flexible wall 16 of the escape slide 12 so that the center of gravity is positioned between the edges 17 of the opening in the flexible wall. In this position, other supports of the inflation apparatus are not needed in most cases.

In order to service the gas generator 19 or provide a replacement, the bolts and nuts 23 may be removed and the generator pulled out of the conduit 11 at the throat end 14. Then after the gas generator 19 is serviced or replaced, it may be inserted in the throat end 14 of the conduit 11 and the nuts and bolts 23 replaced.

In operation, the inflation apparatus 10 may be packed along with the flexible wall 16 of the escape slide 12 and stored in a suitable container or space in an aircraft or other place where needed. Upon release of the escape slide 12 from the packed condition, the inflation apparatus 10 may be actuated by pulling the lanyard 28 which actuates the firing unit 29 and causes nitrogen gas to be ejected from the openings 26 in the nozzle ring 24. The ambient air is then drawn through the passage 27 and the air and nitrogen gas injected into the chamber 32 of the escape slide 12. During this process, the one-way valve 33 is opened and remains in the open position until the pressure within the chamber 32 is greater than the pressure within the delivery end 15 of the conduit 11. The heat caused by generation increases the temperature of the surface of the gas generator 19; however, this surface is shielded by the conduit cylindrical wall 13 and insulated by the space within the passage 27. No hoses are needed between the generator 19 and the aspirating conduit 11 because the generator is mounted within the conduit.

Referring to Fig. 4, a modification is shown of an inflation apparatus 10' like the inflation apparatus 10 shown in Figs. 1, 2 and 3; however, in this modification, a one-way valve 38 is mounted downstream of the gas generator 19' but upstream of a nozzle ring 24' which has a tubular connection 39 to the gas generator. The tubular connection 39 extends through a sleeve 42 supported by a beam 36' (not shown) and has a pair of semicircular flaps 43 and 44 which are resiliently mounted on the radially extending beam to urge the flaps into the position shown abutting an edge of the conduit 11'. When the gas generator 19' is actuated, the flaps 43 and 44 are urged into the position shown in dotted lines to permit the ambient air to flow through the delivery end 15' of the conduit 11' and to be injected into a chamber 32' of the escape slide 12' along with the nitrogen gas ejected through the openings 26' in the nozzle ring 24'.

A relief valve 45 may be provided in the escape slide flexible wall 16' so that when the pressure in the escape slide chamber 32' reaches a predetermined level such as approximately three pounds per square inch (0.21 kilograms per square centimeter), the mixture of nitrogen gas and ambient air may escape through the relief valve. At this pressure or a similar predetermined pressure, the one-way valve 38 will return to the position shown in full lines in Fig. 4 and retain the air below the pressure for which the relief valve 45 is set within the chamber 32'. In all other respects the inflation apparatus 10' shown in Fig. 4 will be operable like the inflation apparatus 10 shown in Figs. 1, 2 and 3.

It is understood that the inflation apparatus embodying the present invention may also be used in other applications and the invention is not confined to the embodiments described and shown in this application.

CLAIMS

1. An inflation apparatus comprising a tubular member having a throat end for communicating with the ambient air, a delivery end in communication with the chamber of an inflatable container, a gas generator positioned within said tubular member, said gas generator being spaced from the wall of said tubular member providing a passage between said generator and said wall for said ambient air to flow past said gas generator, a gas ejection member mounted on said gas generator and containing at least one opening for ejecting gas from said gas generator, said gas ejection member being located on the downstream side of said gas generator toward said delivery end of said tubular member and said opening being positioned for directing gas from said gas generator towards said delivery end, said gas generator providing gas to said ejection member for ejection at a high velocity so that the pressure at said opening is less than the pressure of said ambient air for aspiration of said air through said passage around said gas generator and injection of said air with said gas from said gas generator through said delivery end of said tubular member into the chamber of said inflatable container.

2. An inflation apparatus in accordance with claim 1 wherein said gas generator is spaced from said wall of said tubular member a distance of at least 0.75 inches (1.91 centimeters) to provide insulation from the heat of said gas generator.

3. An inflation apparatus in accordance with claim 1 wherein said tubular member has a cylindrical wall, said gas generator is cylindrical and positioned in concentric relationship to said wall so that said passage has the same width along said generator.

4. An inflation apparatus in accordance with claim 1 wherein said gas generator is supported by strut members extending between said generator and said wall of said tubular member.

5. An inflation apparatus in accordance with claim 3 wherein the diameter of said wall of said tubular member is smaller at said delivery end than at the portion around said gas generator for aspiration of said ambient air.

6. An inflation apparatus in accordance with claim 1 wherein said tubular member has a one-way check valve mounted in said tubular member, and said valve being in a position in which said valve closes said tubular member when said gas generator is not ejecting gas and opens to permit flow of said gas and aspirated air through said tubular member.

7. An inflation apparatus in accordance with claim 6 wherein said check valve is positioned downstream of said gas generator and said gas ejection member.

8. An inflation apparatus in accordance with claim 6 wherein said check valve is positioned downstream of said gas generator and upstream of said gas ejection member and further including a relief valve in communication between said chamber of said inflatable container and said ambient air.

9. An inflation apparatus in accordance with claim 3 wherein the cross-sectional area of said passage around said gas generator is about equal to the cross-sectional area of said tubular member downstream of said gas generator.

10. An inflation apparatus in accordance with claim 1 wherein said inflatable container has a flexible wall of gas-impervious material and said flexible wall has an opening for mounting said tubular member with said delivery end extending into said container.

Fig. 1

Fig. 2

Fig. 3

0039465

*Fig. 4*

| Category | Citation of document with indication, where appropriate, of relevant passages | Relevant to claim |
|---|---|---|
| | FR - A - 2 140 918 (BERTIN)<br>* Page 1, lines 1-5; page 2, lines 26-33; figure 1 *<br>-- | 1,6,7,<br>10 |
| | GB - A - 1 325 760 (KIDDE)<br>* Page 2, lines 75-86 and 104-125; figure 1 *<br>-- | 1,6,7,<br>10 |
| | US - A - 3 431 743 (GREEN)<br>* Column 2, lines 9-16; column 5, line 19; figure 1 *<br>-- | 1,6,7 |
| | US - A - 3 840 057 (LESH)<br>* Column 3, lines 45-51 *<br>-- | 6-8 |
| A | US - A - 3 684 404 (GALBRAITH)<br>* Complete *<br>---- | 1 |

## DOCUMENTS CONSIDERED TO BE RELEVANT

CLASSIFICATION OF THE APPLICATION (Int Cl.)

B 64 D 25/14
F 04 F 5/16

TECHNICAL FIELDS SEARCHED (Int Cl.)

B 64 D
F 04 F
B 01 J

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-08-1981 | ZERI |

EPO Form 1503.1 06.78